# EUROPÄISCHE PATENTSCHRIFT

(11) **EP 1 504 638 B1**
(45) Veröffentlichungstag und Bekanntmachung des Hinweises auf die Patenterteilung: **16.10.2013**
(21) Anmeldenummer: 04450152.6
(22) Anmeldetag: 22.07.2004
(51) Int. Cl.: A01B 13/08, A01B 59/06

(54) **Frontgrubber**
Front mounted cultivator
Cultivateur frontal

(30) Priorität: 08.08.2003 AT 5442003
(43) Veröffentlichungstag der Anmeldung: 09.02.2005
(73) Patentinhaber: Kollitsch, Franz, 9500 Villach (AT)
(72) Erfinder: Kollitsch, Franz, 9500 Villach (AT)
(74) Vertreter: Beer & Partner Patentanwälte KG

(56) Entgegenhaltungen:
- GB-A- 672 118
- US-A- 3 138 210
- US-A- 4 106 795
- US-A- 4 331 206
- US-A- 4 535 849
- US-A- 5 152 349

## Beschreibung

Die Erfindung betrifft einen Grubber mit Zinken, die an einem Grundrahmen befestigt sind, wobei der Grundrahmen an der Vorderseite eines Ackerschleppers festzulegen ist, die Zinken gekrümmt sind und die freien Enden der Zinken bezogen auf die Arbeitsrichtung nach vorne, also vom Ackerschlepper weg weisen (vgl. US 4,331,206 A und US 3,138, 210 A).

In der Landwirtschaft wird zunehmend die Direktsaat angewendet, da sie eine wesentliche Arbeitserleichterung im Ackerbau mit sich bringt. Diese Erleichterung wird erreicht, da mehrere Arbeitsgänge, nämlich pflügen, eggen, säen und walzen in einem einzigen Arbeitsgang erledigt werden können.

Nachteilig bei der Direktsaat ist es, dass der Boden verdichtet wird. Auch die Arbeits- und die Erntemaschinen, die immer größer und schwerer werden, tragen zur Bodenverdichtung bei.

Nachteilig sind auch Monokulturen (schlechte Fruchtfolge), da das Saatbeet mit einer speziellen Bodenfräse oder einer Kreiselegge vorbereitet werden muss. Die bekannten hiezu verwendeten Arbeitsmaschinen ergeben an sich ein sehr gutes Saatbeet, haben aber eine beschränkte Arbeitstiefe von nur etwa 15 cm. Die Spüren von Arbeits- und Erntemaschinen sind meist wesentlich tiefer.

Um Ackerbau erfolgreich zu betreiben, müssen die Böden tiefgründig gelockert werden.

Bekannte Grubber werden an der Rück- oder Vorderseite von Ackerschleppern angebaut. Grubber, die an der Vorderseite eines Traktors angebracht sind und die in Arbeitsrichtung nach vorne gerichtete Zinken aufweisen, sind aus der GB 672 118 A, der US 3 138 210 A und der US 4 331 206 A bekannt.

Die US 3 138 210 A bezieht sich auf ein Werkzeug zur Bodenkultivierung, das mit seinen Zinken um eine zur Bewegungsrichtung parallele horizontale Achse Schwingungsbewegungen ausführen kann, um sich automatisch an unregelmäßige Bodenbedingungen anzupassen.

Aus der US 4 331 206 A ist ein Werkzeug zur Feldbestellung ersichtlich, das an einem um Gelenke in die Höhe verschwenkbaren Rahmen montiert ist. Bei diesen Grubbern kommt es immer wieder zu Verstopfungen durch Ernterückstände.

Werkzeuge zur Feldbestellung mit Sechscheiben sind aus der US 4 535 849 A bekannt, die nur auf der Rückseite eines Ackerschleppers angebaut sind. Die im Heckanbau verwendeten Grubber sind jedoch nachteilig, da das ganze Gewicht an der Heckhydraulik lastet und wenig Platz für-den Tiefenlockerer besteht.

Der Erfindung liegt die Aufgabe zugrunde, einen Grubber anzugeben, der diese Nachteile nicht besitzt.

Gelöst wird diese Aufgabe mit einem Grubber gemäß Anspruch 1.

Durch die erfindungsgemäße Anordnung der Zinken und die Ausrichtung ihrer freien Enden ergibt sich eine vorteilhafte Auflockerung des Bodens, so dass durch den erfindungsgemäßen Grubber der Boden tiefgründig gelockert, aber nicht gemischt wird. So ist eine tiefgründige Belüftung des Bodens kombiniert mit einem guten Gasaustausch und einer guten Wasseraufnahme und Speicherung gewährleistet. Weiters ist die Lenkbarkeit eines mit dem erfindungsgemäßen Grubber ausgerüsteten Ackerschleppers verbessert.

Bevorzugte und vorteilhafte Ausgestaltungen des erfindungsgemäßen Grubbers sind Gegenstand der Unteransprüche.

Durch die erfindungsgemäße Ausgestaltung des Grubbers ergeben sich je nach seiner Ausführungsform einer oder mehrerer der nachstehend genannten Vorteile:
- Gleichmäßige Gewichtsverteilung auf dem Ackerschlepper
- Durch den Frontanbau ist ausreichend Platz, um auf Probleme, wie Ernterückstände, Rücksicht zu nehmen.
- Dank der Leichtzügigkeit ergibt sich eine effektive Bodenlockerung.
- Durch die vorlaufenden Sechscheiben werden Ernterückstände zerschnitten, so dass ein Verstopfen des Grubbers ausgeschlossen ist.

Weitere Einzelheiten und Vorteile der Erfindung ergeben sich aus der nachstehenden Beschreibung bevorzugter Ausführungsbeispiele mit Bezug auf die Zeichnungen. Es zeigt: Fig. 1 einen Grubber mit sechs Zinken; Fig. 2 einen Grubber von der Fahrzeugseite aus gesehen mit acht Zinken und Fig. 3 einen Grubber in Seitenansicht.

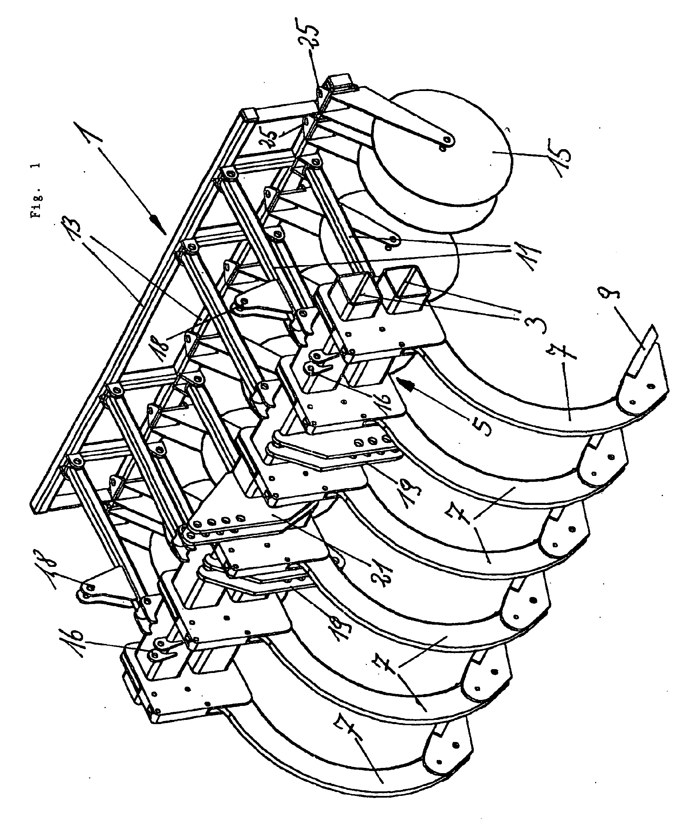

Ein Grubber 1 besitzt einen aus zwei Vierkantrohren 3 bestehenden Grundrahmen 5, an dem im in Fig. 1 gezeigten Ausführungsbeispiel sechs gebogene Zinken 7, deren freie Enden 9 zum Grundrahmen 5 hin weisen, befestigt sind.

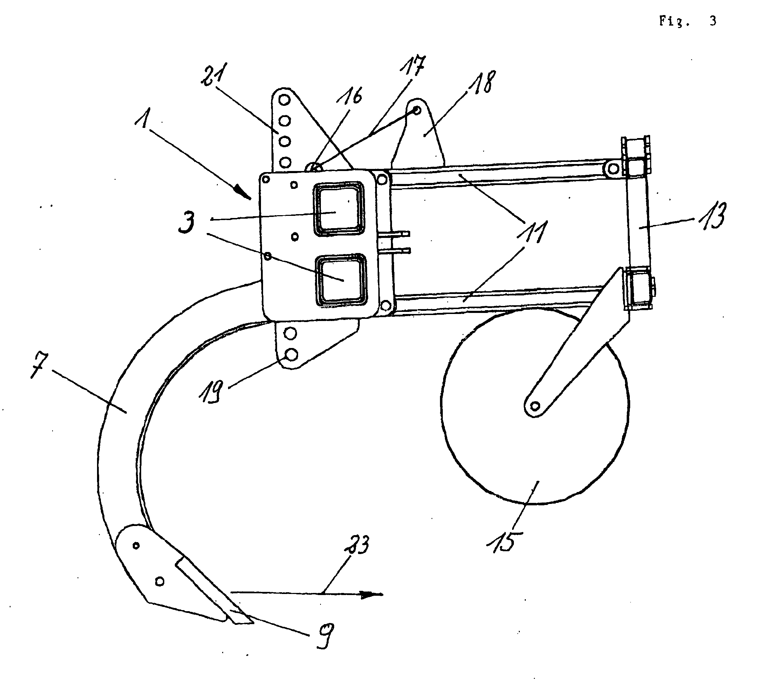

An dem Grundrahmen 5 ist über vier Parallelogrammlenker-Paare 11 ein Hilfsrahmen 13 befestigt, an dem Sechscheiben 15 montiert sind. Die Sechscheiben 15 können einen wie gezeigt glatten Umfang haben oder sie sind am Umfang gezahnt. Durch Hydraulikzylinder 17, die zwischen Laschen 16 am Grundrahmen 5 und Laschen 18 an oberen Lenkern der Parallelogrammlenker-Paare 11 angesetzt sind (siehe Fig. 3) kann die Höhenlage des Hilfsrahmens 13 und die der Sechscheiben 15 relativ zum Grundrahmen 5 und damit der Zinken 7 eingestellt werden.

Der Grubber 1 wird über Anschlussstellen 19 und 21, die am Grundrahmen 5 befestigt sind, an der Vorderseite eines Ackerschleppers angebaut.

Die Zinken 7, die am Grundrahmen 5 befestigt sind, weisen mit ihren freien Enden 9 bezogen auf die Arbeitsrichtung (Pfeil 23 in Fig. 3) nach vorne, also vom Ackerschlepper weg. Wie insbesondere in Fig. 3 gezeigt, sind die freien Enden 9 der Zinken 7, bezogen auf die Anlenkpunkte 19 und 21 am Grundrahmen 5 zum Ackerschlepper hin versetzt angeordnet. Die freien Enden 9 der Zinken 7 liegen bezogen auf die Anlenkpunkte 19 und 21, über die der Grubber an einem Ackerschlepper vorne aufgebaut werden kann, den vorlaufenden Sechscheiben 15 gegenüber. Die Sechscheiben 15 befinden sich - bezogen auf die Arbeitsrichtung (Pfeil 23) - vor den Anlenkpunkten 19 und 21 wogegen die freien Enden 9 der Zinken 7 bezogen auf die Arbeitsrichtung nach den Anlenkpunkten 19 und 21 liegen.

Die am Hilfsrahmen 13 befestigten Sechscheiben 15 sind um lotrechte Achsen 25 schwenkbar, damit während des Benützens des Grubbers 1 gelenkt, also bei Bedarf die Arbeitsrichtung (Fahrtrichtung) geändert werden kann.

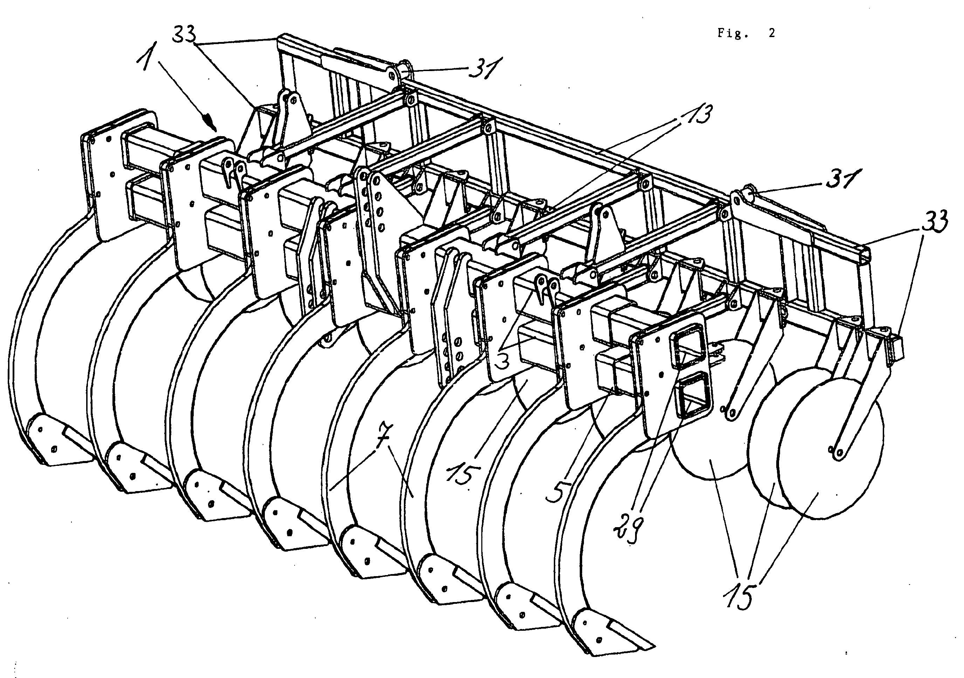

Bei der Ausführungsform des Grubbers 1 nach Fig. 2 sind in die Vierkantrohre 3 des Grundrahmens 5 von beiden Seiten her Formrohre 29 eingeschoben, an denen je eine weitere Zinke 7 mit nach vorne weisendem, freiem Ende 9 befestigt ist. Für die Straßenfahrt können die äußeren Zinken 7 den am Grundrahmen 5 montierten Zinken 7 angenähert werden.

Am Hilfsrahmen 13 mit den Sechscheiben 15 sind um horizontale Schwenkachsen 31 verschwenkbar zusätzliche Rahmenteile 33 befestigt, die je drei Sechscheiben 15 tragen. Die Rahmenteile 33 können für die Straßenfahrt um die Schwenkachsen 31 nach innen geklappt werden, so dass sie auf den oberen Holmen des Hilfsrahmens 13 aufliegen.

Zusammenfassend kann ein Ausführungsbeispiel der Erfindung wie folgt dargestellt werden:
Ein Grubber 1 wird an der Vorderseite eines Ackerschleppers angebaut. Um die Problematik bei an der Vorderseite von an Ackerschleppern angebauten Grubbern 1 zu lösen, wird eine besondere Form der Zinken 7 mit in Fahrtrichtung nach vorne weisenden freien Enden 9 gewählt. Die freien Enden 9 der Zinken 7 sind bezüglich der Anlenkpunkte 19 und 21 des Grubbers 1an der Fronthydraulik des Ackerschleppers zum Ackerschlepper hin versetzt. Dies bewirkt, dass die Zinken 7 geschleppt werden und der Grubber 1 leicht manövriert werden kann. Beim Arbeiten mit dem Grubber 1 heben die Zinken 7 den Ackerboden an und vor den Zinken 7 angeordnete Sechscheiben 15 schneiden den Ackerboden vorher ein. Dadurch bricht der Ackerboden und die auf die Zinken 7 einwirkenden Kräfte sind kleiner.

## Patentansprüche

1. Grubber (1) mit Zinken (7), die an einem Grundrahmen (5) befestigt sind, wobei der Grundrahmen (5) Anlenkpunkte (19, 21) zur Befestigung an der Vorderseite eines Ackerschleppers aufweist, wobei die Zinken (5) gekrümmt sind und die freien Enden (9) der Zinken (7) bezogen auf die Arbeitsrichtung (Pfeil 23) nach vorne, also vom Ackerschlepper weg weisen, **dadurch gekennzeichnet, dass**, bezogen auf die Arbeitsrichtung (Pfeil 23), mehrere, den Zinken vorauslaufende Sechscheiben (15) vorgesehen sind, die, bezogen auf die Arbeitsrichtung (Pfeil 23), vor den Anlenkpunkten (19, 21) angeordnet sind, während die freien Enden (9) der Zinken (7) hinter den Anlenkpunkten (19, 21) angeordnet sind.

2. Grubber nach Anspruch 1, **dadurch gekennzeichnet, dass** die Sechscheiben (15) an einem mit dem Grundrahmen (5) verbundenen Hilfsrahmen (13) um in Gebrauchslage lotrechte Achsen (25) verschwenkbar gelagert sind.

3. Grubber nach Anspruch 2, **dadurch gekennzeichnet, dass** die Sechscheiben (15) hydraulisch (17) der Höhe nach verstellbar gehaltert sind.

4. Grubber nach Anspruch 2 oder 3, **dadurch gekennzeichnet, dass** der Hilfsrahmen (13) über Parallelogrammlenker-Paare (11) mit dem Grundrahmen (5) verbunden ist.

5. Grubber nach einem der Ansprüche 1 bis 4, **dadurch gekennzeichnet, dass** Zinken (7) aus einer Transportstellung in eine Arbeitsstellung am Grundrahmen (5) verschiebbar gehaltert sind.

6. Grubber nach einem der Ansprüche 1 bis 5, **dadurch gekennzeichnet, dass** Sechscheiben (15) an Rahmenteilen (33) gelagert sind, und dass die Rahmenteile (35) in Richtung auf die Mittelebene des Grubbers (1) einklappbar sind.

## Claims

1. A cultivator (1) with tines (7), which are fastened to a basic frame (5), wherein the basic frame (5) has articulation points (19, 21) for fastening to the front side of a field tractor, wherein the tines (5) are curved and the free ends (9) of the tines (7) based on the working direction (arrow 23) face forward, i.e. away from the field tractor, **characterized in that** based on the working direction (arrow 23) a plurality of coulters (15) leading the tines are provided, which, based on the working direction (arrow 23) are arranged in front of the articulation points (19, 21), while the free ends (9) of the tines (7) are arranged behind the articulation points (19, 21).

2. The cultivator according to Claim 1, **characterized in that** the coulters (15) are mounted on an auxiliary frame (13) connected to the basic frame (5) in a manner that is pivotable about axes (25) that are perpendicular in position of use.

3. The cultivator according to Claim 2, **characterized in that** the coulters (15) are mounted hydraulically (17) adjustable in height.

4. The cultivator according to Claim 2 or 3, **characterized in that** the auxiliary frame (13) is connected to the basic frame (5) via parallelogram link pairs (11).

5. The cultivator according to any one of the Claims 1 to 4, **characterized in that** tines (7) are mounted on the basic frame (5) so as to be displaceable from a transport position into a working position.

6. The cultivator according to any one of the Claims 1 to 5, **characterized in that** coulters (15) are mounted on frame parts (33), and **in that** the frame parts (35) can be folded in in the direction of the centre plane of the cultivator (1).

## Revendications

1. Cultivateur (1) comportant des dents (7), qui sont fixées sur un châssis de base (5), dans lequel le châssis de base (5) présente des points d'articulation (19, 21) à des fins de fixation sur le côté avant d'un tracteur agricole, dans lequel les dents (5) sont incurvées et les extrémités libres (9) des dents (7) se détournent vers l'avant par rapport à la direction de travail (flèche 23), c'est-à-dire depuis le tracteur agricole, **caractérisé en ce que** par rapport à la direction de travail (flèche 23) plusieurs disques (15) sortent vers l'avant des dents, lesquels sont disposés devant les points d'articulation (19, 21), par rapport à la direction de travail (flèche 23), alors que les extrémités libres (9) des dents (7) sont disposées derrière les points d'articulation (19, 21).

2. Cultivateur selon la revendication 1, **caractérisé en ce que** les disques (15) sont positionnés de manière basculante autour des axes perpendiculaires (25) dans la position d'exploitation, sur un châssis auxiliaire (13) relié au châssis de base (5).

3. Cultivateur selon la revendication 2, **caractérisé en ce que** les disques (15) sont maintenus de manière réglable en hauteur hydrauliquement (17).

4. Cultivateur selon les revendications 2 ou 3, **caractérisé en ce que** le châssis auxiliaire (13) est relié par l'intermédiaire de paires de bras oscillants en parallélogramme (11) au châssis de base (5).

5. Cultivateur selon une des revendications 1 à 4, **caractérisé en ce que** les dents (7) sont maintenues de manière coulissante d'une position de transport à une position de travail sur le châssis de base (5).

6. Cultivateur selon une des revendications 1 à 5, **caractérisé en ce que** des disques (15) sont positionnés sur des parties de châssis (33), et **en ce que** les parties de châssis (35) peuvent être rabattues dans la direction du plan central du cultivateur (1).
